Europäisches Patentamt

European Patent Office

Office européen des brevets

(11) Veröffentlichungsnummer: **0 518 170 A2**

# EUROPÄISCHE PATENTANMELDUNG

(21) Anmeldenummer: **92109235.9**

(22) Anmeldetag: **02.06.92**

(51) Int. Cl.5: **B60R 16/04**, B62D 49/06

(30) Priorität: **14.06.91 US 715533**

(43) Veröffentlichungstag der Anmeldung:
**16.12.92 Patentblatt 92/51**

(84) Benannte Vertragsstaaten:
**DE ES FR GB IT SE**

(71) Anmelder: **DEERE & COMPANY**
**1 John Deere Road**
**Moline, Illinois 61265(US)**

(72) Erfinder: **Patterson, Jon Michael**
**659 N. 99th Street**
**Wauwatosa, Wisconsin 53226(US)**
Erfinder: **Teal, Richard Donald**
**510 S. Ridge Circle**
**Horicon, Wisconsin 53032(US)**

Erfinder: **Hutchinson, Wayne Robert**
**N7840 Highway TW**
**Mayville, Wisconsin 53050(US)**
Erfinder: **Wasson, Steven Charles**
**4422 Wackerly**
**Midland, Michigan 48667(US)**
Erfinder: **Weitz, James Heinrich**
**151 Sheridan Terrace**
**Ridgewood, New Jersey 07450(US)**
Erfinder: **Nickles, Daniel Robert**
**839 East Shore Road**
**Hewitt, New Jersey 07421(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Fahrzeug mit einem Aufnahmeraum für eine Batterie.**

(57) Ein Fahrzeug ist mit einem Aufnahmeraum (14) für eine Batterie (16) versehen, der die Batterie (16) mit seinem Boden abstützt und eine Abdeckung (18) aufweist, die in einer den Abdeckraum schließenden Stellung verriegelbar ist, einen Zugang zu dem Inneren des Aufnahmeraumes (14) erlaubt, ein Anschlagmittel (30) aufweist, das in der Schließstellung der Abdeckung (18) gegen die Batterie (16) anliegt, und elastische Verriegelungsmittel aufweist.

Fig. 2

Die Erfindung bezieht sich auf ein Fahrzeug mit einem Aufnahmeraum für eine Batterie, der die Batterie mit seinem Boden abstützt und eine Abdeckung aufweist, die in einer den Abdeckraum schließenden Stellung verriegelbar ist und einen Zugang zu dem Inneren des Aufnahmeraumes erlaubt.

Typischer Weise sind Fahrzeuge, die von einem Verbrennungsmotor aus angetrieben werden, mit einer Batterie ausgerüstet, die zum Anlassen des Fahrzeuges benötigt wird. Dabei sind die Batterien an einer gegen Witterungseinflüsse und gegen Motorhitze geschützten Stelle, möglichst erschütterungsfrei und in der Nähe des Anlassers einzubauen. Die Batterie soll gut zugänglich sein.

Bei Personenkraftwagen ist es bekannt, die Batterie unter der Fahrzeughaube auf einem Podest zu installieren und durch eine Klemmvorrichtung gegen Verrutschen zu sichern.

Bei Ackerschleppern ist es bekannt, die Batterie in einem gesonderten Gehäuse anzuordnen und zu sichern. Solche Gehäuse weisen abnehmbare Abdeckungen auf, um den Zugang zu der Batterie zu ermöglichen.

Allen diesen bekannten Anordnungen haftet der Nachteil an, daß die die Batterie sichernden Einrichtungen teileaufwendig und damit teuer sind. Vielfach müssen auch Werkzeuge benutzt werden, um die Batterie, beispielsweise zum Laden oder um sie zu ersetzen, entfernen zu können.

Die mit der Erfindung zu lösende Aufgabe wird darin gesehen, eine Batterie mit möglichst wenigen Teilen in einem Fahrzeug erschütterungsfrei und leicht zugänglich zu sichern, wobei nach einem weiteren Aspekt der Erfindung zum Sichern und Lösen der Batterie keine Werkzeuge benötigt werden. Diese Aufgabe ist nach der Erfindung dadurch gelöst worden, daß die Abdeckung ein Anschlagmittel aufweist, das in der Schließstellung der Abdeckung gegen die Batterie anliegt, und elastische Verriegelungsmittel aufweist. Auf diese Weise wird die Batterie in der Schließstellung der Abdeckung durch die Anschlagmittel sicher auf ihrem Platz gehalten. Die von Hand zu betätigenden Verriegelungsmittel verändern infolge ihrer Elastizität beim Verriegeln ihre Form, was nach einem Entriegeln wieder rückgängig gemacht wird, wodurch im verriegelten Zustand eine zusätzliche Spannkraft erzeugt wird, die die Batterie fest auf den sie aufnehmenden Boden drückt. Damit ist auch ein erschütterungsfreier Einbau gegeben.

Die zusätzliche Spannkraft kann nach einem weiteren Vorschlag der Erfindung dadurch erzeugt werden, daß die Abdeckung zum Verriegeln elastisch ausgebildet ist. Damit biegt sich die Abdeckung beim Verriegeln aus und springt beim oder nach dem Entriegeln in ihre alte Form zurück.

Hierzu wird nach der Erfindung vorgeschlagen, daß die Abdeckung aus federndem Kunststoff hergestellt ist, wobei die Abdeckung, das Anschlagmittel und die Verriegelungsmittel einstückig ausgebildet und gegossen werden können. Im Ganzen gesehen, ist dies ein kostengünstiges Herstellungsverfahren.

Die Montage ist ebenfalls einfach, wenn die Abdeckung schwenkbar mit dem Fahrzeug verbunden ist. Es ergibt sich kein Losteil, der verloren gehen könnte.

Ferner kann nach der Erfindung vorgesehen werden, daß die Abdeckung mit mindestens einem Steckteil versehen ist und das Fahrzeug wenigstens eine Öffnung aufweist, mit der der Steckteil verriegelbar ist. Hierdurch ergibt sich eine einfache Verriegelung, da die Wartungsperson den Steckteil nur nach unten zu drücken braucht, wobei gleichzeitig durch Ausbiegen der Abdeckung die zusätzliche Spannkraft entsteht, die auch den Steckteil sicher in der Öffnung hält.

Im Einzelnen können zwei Steckteile vorgesehen sein, die im eingebauten Zustand der Batterie beiderseits der Batterie liegen und in je eine Öffnung am Fahrzeug eingreifen, wobei das an der Abdeckung vorgesehene Anschlagmittel zwischen den Steckteilen vorgesehen ist. Das Anschlagmittel wird dann beim Ausbiegen der Abdeckung fest gegen die Batterie gezogen.

Von Vorteil ist es ferner, daß die Abdeckung aus zwei in einem Winkel miteinander verbundenen Schenkeln besteht, wobei der erste Schenkel das Anschlagmittel und die Steckteile aufweist und der zweite Schenkel mit dem Fahrzeug schwenkbar verbunden ist.

Schließlich kann erfindungsgemäß noch vorgesehen werden, daß der Aufnahmeraum an seiner Frontseite durch die Abdeckung verschließbar ist, die Abdeckung in ihrem unteren Bereich an das Fahrzeug schwenkbar angeschlossen ist, der erste Schenkel der Abdeckung im eingebauten Zustand der Batterie Abstand zu der Oberseite der Batterie aufweist und das Anschlagmittel aus zwei hochkant angeordneten und Ausnehmungen aufweisenden Flachteilen besteht, die zueinander Abstand aufweisen und die Batterie mit ihren Ausnehmungen an zwei Seiten erfassen.

Der Halt der Batterie kann noch dadurch verbessert werden, daß am Boden des Aufnahmeraumes an der dem Anschlagmittel abgelegenen Seite zwei Winkelteile für die Aufnahme der Batterie vorgesehen sind. Ein Verrutschen der Batterie ist damit ausgeschlossen, auch wenn nach langen Einsatzzeiten die von der Abdeckung ausgehende Spannkraft einmal nachlassen sollte.

In der Zeichnung ist ein nachfolgend näher erläutertes Ausführungsbeispiel der Erfindung dargestellt. Es zeigt:

Fig. 1      ein in der Landschaftspflege einsetzbares Fahrzeug,

Fig. 2 einen Aufnahmeraum für eine Batterie mit einer Abdeckung,

Fig. 3 den Aufnahmeraum ohne Batterie in perspektivischer Darstellung und

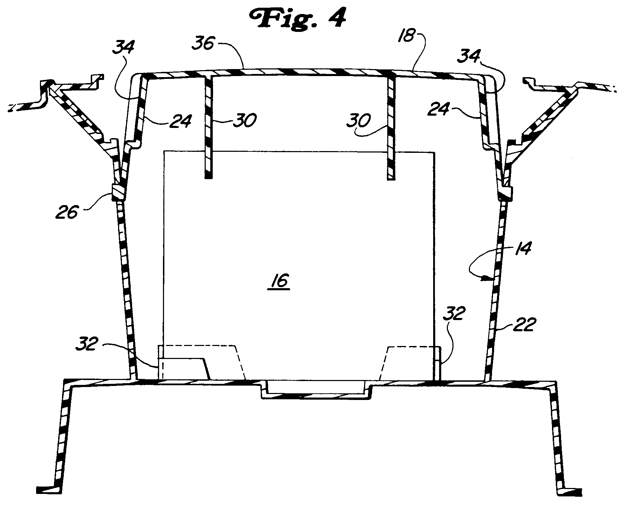

Fig. 4 den Aufnahmeraum mit Batterie und Abdeckung im Schnitt.

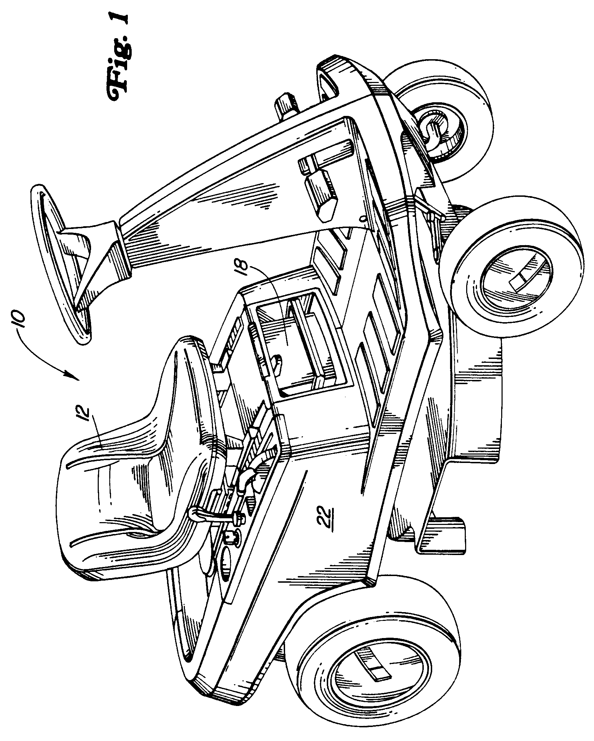

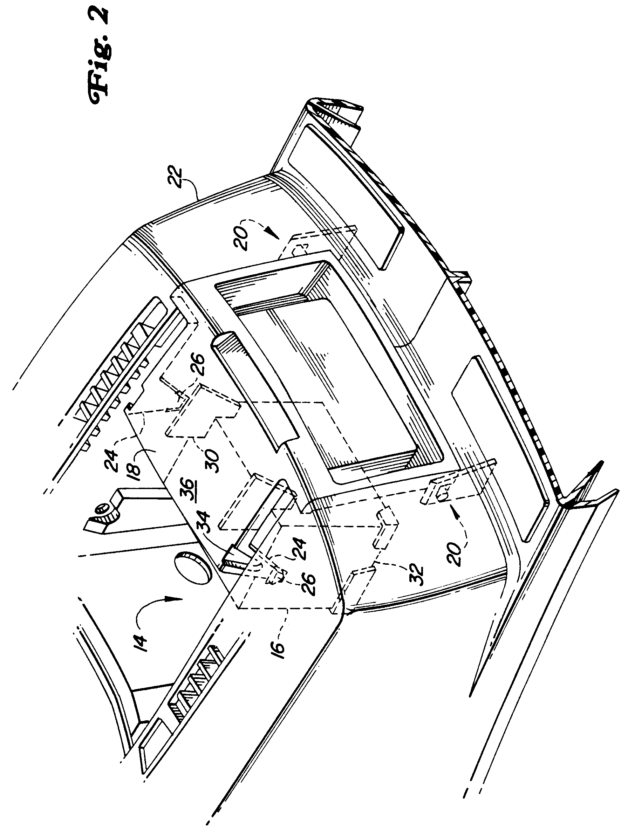

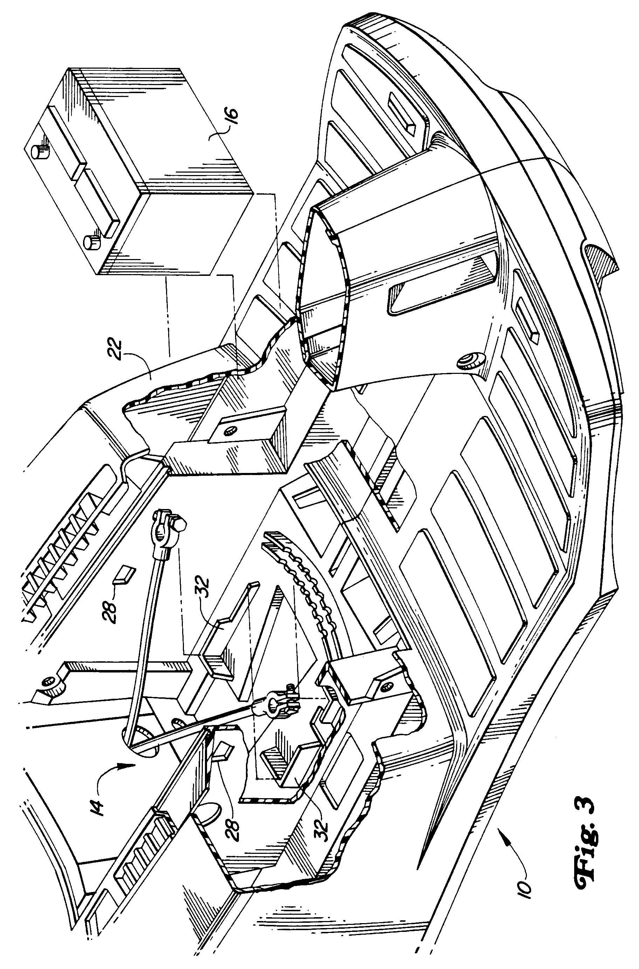

In Fig. 1 der Zeichnung ist ein Fahrzeug 10 mit einem Sitz 12 für einen Fahrer dargestellt. Ein als Aufnahmeraum 14 ausgebildeter Gehäuseabschnitt befindet sich unterhalb des Sitzes, wie aus den Fig. 2 und 3 zu erkennen ist. In diesem Aufnahmeraum 16 können Fahrzeugkomponenten Platz finden, im vorliegenden Fall eine Batterie 16. Der Aufnahmeraum 14 wird frontseitig durch eine Abdeckung 18 verschlossen, die aus Kunststoff hergestellt und mit dem Fahrzeug 10 unterhalb des Sitzes schwenkbar verbunden ist.

Fig. 2 zeigt die Abdeckung 18 in ihrer Schließstellung, in der sie die Batterie 16, die sich auf dem Boden des Aufnahmeraumes abstützt, in ihrer Lage im Aufnahmeraum 14 sichert. Die Abdeckung 18 besteht im wesentlichen aus zwei in einem rechten Winkel miteinander verbundenen Schenkeln, wobei der erste Schenkel über eine Schwenkeinrichtung 20 mit dem ebenfalls aus Kunststoff bestehenden Fahrzeugaufbau 22 verbunden ist. Sie ist aus ihrer nicht dargestellten Offenstellung vertikal in die Schließstellung verstellbar, in der sich der zweite Schenkel der Abdeckung oberhalb der Batterie 16 befindet. In der Schließstellung ist die Abdeckung 18 mit dem Fahrzeugaufbau verriegelbar, wozu der in der Schließstellung etwa horizontal verlaufende zweite Schenkel der Abdeckung 18 an seinen beiden Seiten mit zwei nach unten weisenden Steckteilen 24 versehen ist, die an ihren unteren Enden je ein Hakenteil 26 aufweisen. Die Hakenteile 26 können in Öffnungen 28 eingreifen, die in die Seitenwände des Aufnahmeraumes 14 eingearbeitet sind.

In der Schließstellung weist der zweite Schenkel der Abdeckung 18 zu der Oberseite der Batterie 16 einen gewissen Abstand auf, der Raum für die Anordnung eines Anschlagmittels 30 bietet. Dieses hat die Aufgabe, die Batterie im eingebauten Zustand auf ihrem Platz zu halten und besteht beim Ausführungsbeispiel aus zwei hochkant angeordneten Platten, die mit ihrer Oberseite mit der Abdeckung 18 verbunden sind und an ihrer Unterseite Ausnehmungen aufweisen, die in der Schließstellung der Abdeckung 18 gegen die Vorderseite und gegen die Oberseite der Batterie anliegen. Die Abdeckung 18, das Anschlagmittel 30 und die beiden Steckteile 24 sind einstückig ausgebildet und aus Kunststoff gegossen. Um den Halt der Batterie noch weiter zu sichern, sind auf dem Boden des Aufnahmeraumes 14 hochstehende Leisten 32 angeordnet, die die Batterie in ihren unteren Ecken umfassen. Fingerausnehmungen 34 sind noch in den Steckteilen 24 vorgesehen. Sie können von einer Person kontaktiert werden, um die Steckteile 24 in die Öffnungen 28 einzuführen bzw. um die Steckteile wieder aus den Öffnungen zu entfernen.

Die Abdeckung 18 ist zwischen einer ersten, einer zweiten und einer dritten Stellung verschwenkbar. In der ersten Stellung ist die Abdeckung nach vorne verschwenkt, um einen Zugang zu dem Inneren des Aufnahmeraumes zu haben, wenn die Batterie beispielsweise gewartet werden muß oder entfernt werden soll. Da die Batterie unter dem Sitz angeordnet ist, ist an dem Fahrzeug auch genügend Platz, um die Abdeckung nach vorne zu klappen. Zum Schließen des Aufnahmeraumes 14 wird die Abdeckung 18 aus dieser ersten Stellung nach oben und rückwärts in ihre zweite Stellung verschwenkt, in der das Anschlagmittel 30 gegen die Batterie 16 anliegt. In der zweiten Stellung sind die Haken 26 noch nicht in die Öffnungen 28 eingesetzt. Dies ist erst in der dritten Stellung der Abdeckung 18 der Fall. Um nun die Abdeckung 18 aus ihrer zweiten Stellung in ihre dritte zu verbringen, ergreift die Wartungsperson mit ihren Fingern die Fingerausnehmungen 34 und preßt die Steckteile 24 nach unten. Der obere, sich zwischen den Steckteilen 24 der Abdeckung befindliche Teil 36 wird sich dabei infolge der von der Wartungsperson aufgewendeten Kraft biegen und die Steckteile mit ihren Haken wandern weiter nach unten, so daß sie dann leicht in die Öffnungen 28 eingesetzt werden können. Bei dem Drücken nach unten werden die Steckteile infolge der Durchbiegung der Abdeckung mit ihren unteren Enden auch leicht nach außen wandern, so daß die Haken 26 selbsttätig in die Öffnungen 28 einschnappen können. Die Abdeckung befindet sich in ihrer dritten Stellung, wenn die Steckteile in die Öffnungen 28 im seitlichen Fahrzeugaufbau eingreifen.

In der dritten Stellung der elastisch ausgebildeten Abdeckung 18 ist der obere Teil 36 der Abdeckung 18 bzw. ihr zweiter Schenkel zumindest in dem Bereich zwischen den Steckteilen verformt. Die Verformung bewirkt, daß die Haken 26 soweit nach unten wandern, daß sie leicht in die Öffnungen 28 eingreifen können. Gleichzeitig drückt das Anschlagmittel 30 infolge der in ihm vorgesehenen Ausnehmungen die Batterie nach unten und nach rückwärts gegen die hochstehenden Leisten 32. Die durch das Biegen der Abdeckung entstehende Spannkraft drückt das Anschlagmittel ständig auf die Batterie, so daß diese sicher und erschütterungsfrei auf ihrem Platz gehalten ist. Da die Abdeckung beim Verriegeln so gespannt wird, daß sie die Batterie sicher hält, sind zusätzliche Spannmittel, wie Federn, nicht erforderlich. Die Anzahl der Einzelteile ist somit verringert und die Kosten für die Herstellung und für die Montage sind erheblich reduziert.

Die elastische Ausbildung der Abdeckung bewirkt ferner, daß die Abdeckung nach dem Entriegeln wieder in ihre alte Form zurückspringt. Die elastische Ausbildung der Abdeckung wird als besonders vorteilhaft angesehen, doch ist es im Rahmen der Erfindung auch denkbar, nur die Steckteile elastisch auszugestalten, beispielsweise durch Verwendung von Federmitteln, um eine Spannkraft zu erzeugen, die die Batterie nach unten und fest auf ihre Auflage drückt.

Um die Abdeckung 18 wieder öffnen zu können, drückt die Bedienungsperson die Fingerausnehmungen 34 in den Steckteilen 24 wieder nach innen, wobei die Haken 26 aus den beiden Öffnungen 28 austreten. Die Abdeckung springt in ihre ursprüngliche Form zurück, wobei die Steckteile nach oben schnellen. Die Abdeckung 18 nimmt wieder ihre zweite Stellung ein, in der die Haken 26 nicht mehr zu den Öffnungen ausgerichtet sind. Die Abdeckung kann dann nach oben und nach vorne in ihre erste Stellung verschwenkt werden. In dieser Stellung kann die Batterie aus ihrem Aufnahmeraum entnommen werden, nachdem auch der Kabelanschluß entfernt wurde.

Durch die elastische Ausbildung wird die auf die Batterie einwirkende Spannkraft erzeugt, die die Batterie auf ihrem Platz sicher hält. Irgendwelche Werkzeuge zum Festsetzen der Batterie sind nicht erforderlich. Erst recht nicht, zusätzliche Befestigungsmittel, wie Schrauben, Stangen oder Klemmen. Die besondere Ausbildung der Abdeckung macht es auch möglich, daß Batterien unterschiedlicher Größe Verwendung finden können.

**Patentansprüche**

1. Fahrzeug mit einem Aufnahmeraum (14) für eine Batterie (16), der die Batterie (16) mit seinem Boden abstützt und eine Abdeckung (18) aufweist, die in einer den Abdeckraum schließenden Stellung verriegelbar ist und einen Zugang zu dem Inneren des Aufnahmeraumes (14) erlaubt, dadurch gekennzeichnet, daß die Abdeckung (18) ein Anschlagmittel (30) aufweist, das in der Schließstellung der Abdeckung (18) gegen die Batterie (16) anliegt, und elastische Verriegelungsmittel aufweist.

2. Fahrzeug nach Anspruch 1, dadurch gekennzeichnet, daß die Abdeckung (18) zum Verriegeln elastisch ausgebildet ist.

3. Fahrzeug nach Anspruch 1 oder 2, dadurch gekennzeichnet, daß die Abdeckung (18) aus federndem Kunststoff hergestellt ist.

4. Fahrzeug nach einem oder mehreren der vorherigen Ansprüche, dadurch gekennzeichnet, daß die Abdeckung (18) schwenkbar mit dem Fahrzeug (10) verbunden ist.

5. Fahrzeug nach einem oder mehreren der vorherigen Ansprüche, dadurch gekennzeichnet, daß die Abdeckung (18) mit mindestens einem Steckteil (24) versehen ist und das Fahrzeug wenigstens eine Öffnung (28) aufweist, mit der der Steckteil (24) verriegelbar ist.

6. Fahrzeug nach Anspruch 5, dadurch gekennzeichnet, daß zwei Steckteile (24) vorgesehen sind, die im eingebauten Zustand der Batterie (16) beiderseits der Batterie (16) liegen und in je eine Öffnung (28) am Fahrzeug (10) eingreifen, wobei das an der Abdeckung (18) vorgesehene Anschlagmittel (30) zwischen den Steckteilen (24) vorgesehen ist.

7. Fahrzeug nach einem oder mehreren der vorherigen Ansprüche, dadurch gekennzeichnet, daß die Abdeckung (18) aus zwei in einem Winkel miteinander verbundenen Schenkeln besteht, wobei der erste Schenkel das Anschlagmittel (30) und die Steckteile (24) aufweist und der zweite Schenkel mit dem Fahrzeug (10) schwenkbar verbunden ist.

8. Fahrzeug nach Anspruch 7, dadurch gekennzeichnet, daß der Aufnahmeraum (14) an seiner Frontseite durch die Abdeckung (18) verschließbar ist, die Abdeckung (18) in ihrem unteren Bereich an das Fahrzeug (10) schwenkbar angeschlossen ist, der erste Schenkel der Abdeckung (18) im eingebauten Zustand der Batterie (16) Abstand zu der Oberseite der Batterie (16) aufweist und das Anschlagmittel (30) aus zwei hochkant angeordneten und Ausnehmungen aufweisenden Flachteilen besteht, die zueinander Abstand aufweisen und die Batterie (16) mit ihren Ausnehmungen an zwei Seiten erfassen.

9. Fahrzeug nach Anspruch 8, dadurch gekennzeichnet, daß am Boden des Aufnahmeraumes (14) an der dem Anschlagmittel (30) abgelegenen Seite zwei Winkelteile (32) für die Aufnahme der Batterie (16) vorgesehen sind.

Fig. 1

EP 0 518 170 A2

**Fig. 2**

Fig. 3

Fig. 4